# EUROPÄISCHE PATENTSCHRIFT

(11) **EP 1 769 180 B1**
(45) Veröffentlichungstag und Bekanntmachung des Hinweises auf die Patenterteilung: **01.09.2010**
(21) Anmeldenummer: 05767990.4
(22) Anmeldetag: 15.07.2005
(51) Int. Cl.: F16L 3/18

(54) **Rollenlageranordnung mit zumindest einer drehbar gelagerten Rolle**
Roller bearing arrangement with at least one rotationally mounted roller
Système de roulement a rouleaux comportant au moins un rouleau monté rotatif

(30) Priorität: 20.07.2004 DE 102004035908
(43) Veröffentlichungstag der Anmeldung: 04.04.2007
(73) Patentinhaber: SIEMENS AKTIENGESELLSCHAFT, 80333 München (DE)
(72) Erfinder: KOCH, Hermann, 91466 Gerhardshofen (DE)
(86) Internationale Anmeldenummer: PCT/EP2005/053414
(87) Internationale Veröffentlichungsnummer: WO 2006/008275

(56) Entgegenhaltungen:
- EP-A- 1 213 242
- DE-A- 1 926 892
- DE-A- 1 926 892
- DE-A1- 4 237 949
- US-A- 813 588
- US-A- 3 016 219
- US-A- 3 791 564

## Beschreibung

Die Erfindung bezieht sich auf eine Rollenlageranordnung mit zumindest einer drehbar gelagerten Rolle, auf welche ein sich entlang einer Längsachse erstreckendes und verschiebbares Element auflegbar ist, wobei eine Drehachse der Rolle im Wesentlichen quer zur Längsachse des verschiebbaren Elements ausgerichtet ist und der Rollenlageranordnung eine Bremseinrichtung zugeordnet ist, die zu einem Angreifen an dem lang gestreckten Element eingerichtet ist, wobei die Bremseinrichtung quer zur Längsachse des verschiebbaren Elementes parallel zu der Drehachse der Rolle auf eine Oberfläche des verschiebbaren Elementes aufpressbar ist. Eine derartige Rollen-Lageranordnung ist bekannt aus der US 3 016 219 A bzw. der DE 42 37 949 A1.

Bei dem Verlegen von Elektroenergiekabeln ist es bekannt, Rollenlageranordnungen zu verwenden. Bei dem Einziehen eines Kabels in einen Kabelkanal oder auf eine Kabelpritsche wird das Kabel auf drehbar gelagerten Rollen eines oder mehrerer Rollenlager abgelegt. Somit ist es möglich, die mehrere Meter langen Kabelenden leicht zu verschieben und den Kabelmantel vor Beschädigungen bzw. mechanischem Abtrag zu schützen.

Aufgrund von örtlichen Gegebenheiten ist es teilweise notwendig, das Kabel, welches ein verschiebbares Element ist, über Biegungen oder um Ecken herum zu führen. Dabei entstehende mechanische Spannungen führen zu einem Verdrehen des Kabels. Oftmals soll jedoch eine bestimmte Lage des zu verschiebenden Elementes gewährleistet werden, beispielsweise um Markierungen weiterhin sichtbar zu halten oder bestimmte Lageanordnungen von Bauteilen des zu verschiebenden Elementes zu gewährleisten. Aufgrund der Biegeradien und der Zugbeanspruchungen kann es zu einem Verdrehen bzw. Verkippen des Elementes um seine Längsachse kommen. Nach dem Verlegen ist es sehr aufwändig, beispielsweise das verlegte Kabel um seine Längsachse herum zu verdrehen. Aufgrund seiner teilweise sehr langen Ausdehnung ist dies kaum oder gar nicht möglich.

Eine Rollenlageranordnung zur Führung eines sich entlang einer Längsachse erstreckenden verschiebbaren Elementes ist beispielsweise aus der Offenlegungsschrift DE 1 926 892 bekannt. Dort ist vorgesehen, ein verschiebbares Element auf zwei ortsfesten Rollen aufliegen zu lassen und das langgestreckte Element über die ortsfesten Rollen gleiten zu lassen. Die ortsfesten Rollen sind Teil einer sogenannten Torsionsbremse, an welcher vorgesehen ist, dass eine weitere Rolle bedarfsweise in einen Spalt zwischen den ortsfesten Rollen eingeführt wird. Dadurch wird ein mehrfaches Umlenken und wellenartiges Verformen des verschiebbaren Elementes erzwungen.

Bei jedem Umlenken erfolgt eine Biegebeanspruchung des verschiebbaren Elementes. Aufgrund der Biegebeanspruchung kann es zu Materialschwächungen an dem Element kommen. Die Biegebeanspruchung kann jedoch zu einer strukturellen Schwächung des verschiebbaren Elementes führen.

Der Erfindung liegt daher die Aufgabe zugrunde, eine Rollenlageranordnung anzugeben, die eine Verlegung eines sich entlang einer Längsachse erstreckenden Elementes ermöglicht, wobei bei begrenzter mechanischer Belastung eine bestimmte Lage des Elementes beibehalten wird.

Die Aufgabe wird bei einer Rollenlageranordnung der eingangs genannten Art erfindungsgemäß dadurch gelöst, dass die Bremskraft der Bremseinrichtung regelbar ist.

Die Verwendung einer Bremseinrichtung gestattet es, ein ungewolltes Verdrehen des verschiebbaren Elementes zu verhindern. Neben der Verlegung von Kabeln kann eine erfindungsgemäße Rollenlageranordnung auch dem Verlegen von gasisolierten Rohrleitern dienen. Gasisolierte Rohrleiter besitzen eine im Wesentlichen rohrförmige Außenkontur aus einem festen Material. Im Innern ist ein elektrischer Leiter elektrisch isoliert abgestützt angeordnet. Derartige gasisolierte Rohrleiter werden beispielsweise in kurzen vorgefertigten Enden auf Baustellen angeliefert und dort zu mehrere 100 bis mehrere 1.000 Meter lange Elemente zusammengefügt. Diese langen gasisolierten elektrischen Leiter können beispielsweise auf der Rollenlageranordnung nach ihrer Zusammenfügung transportiert werden. Zum Verhindern von Teilentladungen im Innern des gasisolierten elektrischen Leiters sind im Bodenbereich jeweils Teilchenfallen angeordnet. Für die elektrische Wirksamkeit dieser Teilchenfallen ist es notwendig, dass diese stets an der tiefsten Stelle des gasisolierten elektrischen Leiters angeordnet sind. Durch eine Verlegung mit erfindungsgemäßen Rollenlagern und den zugeordneten Bremseinrichtungen kann ein Verdrehen des gasisolierten Leiters verhindert werden. Durch das Verdrehen würde sonst der Bodenbereich mit der Teilchenfalle aus der Tiefpunktlage in eine seitliche Lage herausgedreht werden und die Wirksamkeit der Teilchenfalle wäre nicht mehr gegeben. Ein derartiges Verdrehen ist beispielsweise bei einer Verlegung der gasisolierten Leiters in unebenen Gebieten zu beobachten. Aufgrund der mechanischen Spannungen sowohl des äußeren Rohres als auch des elektrischen Leiters im Innern können Kräfte auftreten, die ein Verdrehen des Leiters hervorrufen. Durch das Aufbringen einer Gegenkraft durch die Bremseinrichtung wird ein Verdrehen des verschiebbaren Elementes verhindert. Eine Bremseinrichtung kann leicht in Abhängigkeit des verdrehens des zu verschiebenden Elementes angesteuert werden. Der benötigte Kraftbedarf ist dabei relativ gering, da lediglich eine Gegenkraft durch die von dem zu verschiebenden Element erzeugte Drehbewegung erzeugt werden muss. Aufwändige Haltevorrichtungen, Dreheinrichtungen oder ähnliches sind so nicht von Nöten. Die Bremswirkung ist im Wesentlichen quer zur Transportrichtung ausgerichtet.

Weiterhin kann vorteilhaft vorgesehen sein, dass die Bremseinrichtung ein seitliches Ausbrechen des lang gestreckten Elementes begrenzt.

Gerade bei dem Verlegen von lang gestreckten verschiebbaren Elementen in Kurvenbereichen oder über Hügelkuppen neigen diese aus der Lagerung auf der drehbaren Rolle der Rollenlageranordnung seitlich auszubrechen. Daher ist es günstig, die Bremseinrichtung neben ihrer bremsenden Wirkung auch als Führungselement zu verwenden. Insbesondere bei einem seitlichen Ausbrechen des zu verschiebenden Elementes ist oftmals ein Verdrehen zu beobachten, so dass durch das Bremselement sowohl Verdrehung als auch Führung gewährleistet sind.

Eine weitere vorteilhafte Ausgestaltung kann vorsehen, dass die Bremseinrichtung eine Bremsrolle aufweist.

Eine Bremsrolle ist besonders leicht in ihrer Bremswirkung steuerbar. Zum einen kann die Bremsrolle auf die Oberfläche des zu verschiebenden Elementes aufgepresst werden, wodurch bei zunehmendem Anpressdruck die Bremswirkung steigt. Gleichzeitig wird durch die drehbare Lagerung der Rolle die Bewegung des verschiebbaren Elementes in Verschieberichtung nur in einem geringen Umfange beeinflusst. Bei einer entsprechenden Profilierung der Bremsrolle, beispielsweise durch eine konische oder taillierte Form, kann die Verdrehung des zu transportierenden Elementes um seine Längsachse herum zusätzlich abgebremst werden.

Dabei kann weiterhin vorteilhaft vorgesehen sein, dass die Bremsrolle eine im Wesentlichen in einer Vertikalen liegende Drehachse aufweist.

Durch die im wesentlichen vertikale Drehachse ist es leicht möglich, eine seitliche Führung des zu verschiebenden Elementes zu gewährleisten. Je nach dem Verlegeweg des zu verschiebenden Elementes ist eine Bremsrolle mit im Wesentlichen vertikal liegender Bremsachse jeweils auf der Seite vorzusehen, an welcher ein Ausbrechen des zu verschiebenden Elementes zu erwarten ist. Dieser Ort liegt beispielsweise in einem Kurvenabschnitt auf der Innenseite der Kurve.

Weiterhin kann vorteilhaft vorgesehen sein, dass die Bremseinrichtung auf das lang gestreckte Element aufsetz- und abhebbar ist.

Ein Aufsetzen und Abheben der Bremseinrichtung gestattet es, ein Abbremsen gezielt einzuleiten. Dadurch wird zu Zeitpunkten in denen eine Verdrehung noch nicht zu befürchten ist, das Verschieben bzw. Ziehen des zu verlegenden Elementes durch die Bremseinrichtung nicht beeinträchtigt. Weiterhin kann durch eine Steuerung der Anpresskraft die Wirksamkeit der Bremseinrichtung gezielt beeinflusst werden. Dabei kann die Bremseinrichtung, wie oben genannt, eine Bremsrolle aufweisen oder auch andere Bremselemente am Umfang quer zur Verschieberichtung des zu verschiebenden Elementes aufsetzen.

Erfindungsgemäß ist vorgesehen, dass die Bremskraft der Bremseinrichtung regelbar ist.

Je nach Konstruktion des zu verschiebenden Elementes bzw. dem zu folgenden Verlegepfad können unterschiedlich starke Kräfte auftreten, die eine Verdrehung an dem zu verlegenden Element hervorrufen. Durch das Vorsehen einer regelbaren Bremseinrichtung kann so individuell auf verschiedene Anforderungen reagiert werden. Somit ist eine Rollenlageranordnung für viele Einsatzzwecke und Verlegearten verwendbar.

Bei einem Verfahren zum Verschieben eines sich entlang einer Längsachse erstreckenden Elementes, wobei das Element auf zumindest einer drehbar gelagerten Rolle zumindest eines Rollenlagers aufliegt und in Richtung der Längsachse verschiebbar ist, ist vorgesehen, dass
- das lang gestreckte Element in Richtung seiner Längsachse auf der mindestens einen Rolle bewegt wird und
- eine zum Angreifen am Umfang des lang gestreckten Elementes eingerichtete Bremseinrichtung betätigt wird, um eine Verdrehung des lang gestreckten Elementes um seine Längsachse zu vermeiden oder gezielt hervorzurufen.

Durch die Nutzung einer Bremseinrichtung ist, wie vorstehend beschrieben, ein Verdrehen eines zu verschiebenden Elementes auf einem Rollenlager verhinderbar. Es kann auch vorgesehen sein, dass durch die Bremseinrichtung gezielt Verwindungen in dem zu verschiebenden Element hervorgerufen werden und so eine Drehbewegung des zu verschiebenden Elementes auf dem Rollenlager erzwungen wird.

Vorteilhaft kann weiterhin vorgesehen sein, dass mehrere in Richtung der Längsachse hintereinander liegende Bremseinrichtungen in Abhängigkeit einer Verdrehung des lang gestreckten Elementes unabhängig betätigt werden.

Bei dem Vorsehen mehrerer Rollenlager denen jeweils Bremseinrichtung zugeordnet sind, ist es besonders effektiv möglich, eine Verdrehung des lang gestreckten Leiters zu vermeiden bzw. gezielt einzuleiten. Gezielt kann so eine Verwindung des Leiters neutralisiert oder erzeugt werden.

Im Folgenden wird die Erfindung anhand eines Ausführungsbeispiels in einer Zeichnung schematisch gezeigt und nachfolgend näher beschrieben.

Dabei zeigt die
- Figur 1: den verlegepfad eines gasisolierten elektrischen Rohrleiters, die
- Figur 2: eine Ansicht einer Rollenlageranordnung und die
- Figur 3: eine Querschnittsansicht des gasisolierten Leiters mit Rollenlageranordnung.

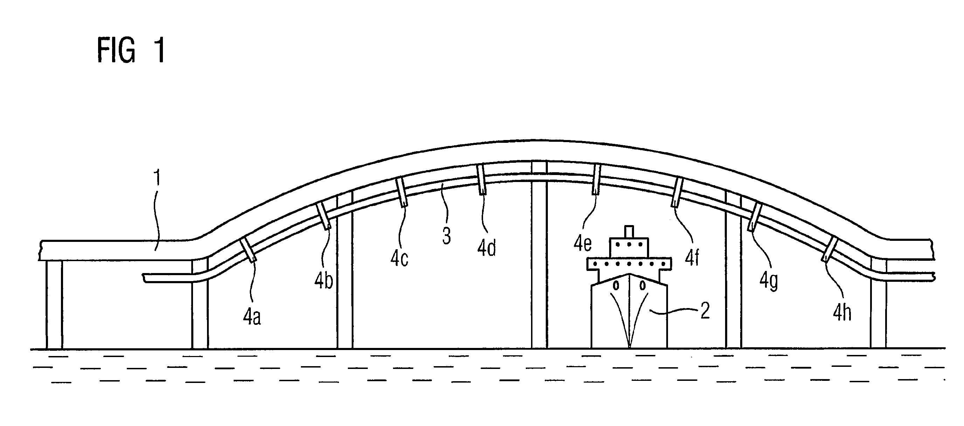

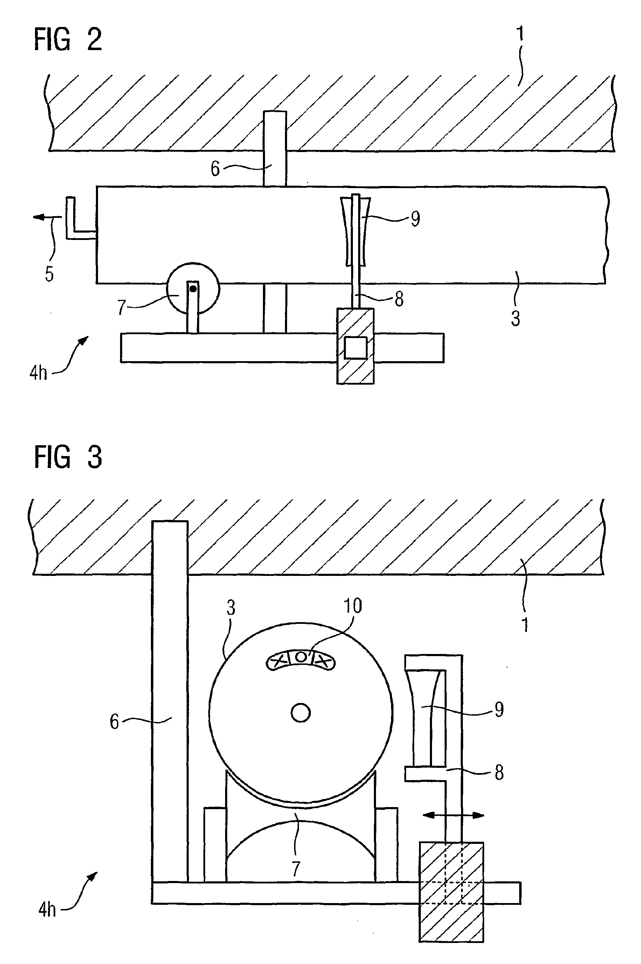

Die Figur 1 zeigt eine Brücke 1, die sich über ein Gewässer erstreckt. Zum Ermöglichen einer Passage hoher Schiffe 2 weist die Brücke 1 einen Bogen auf. Dem Bogenverlauf folgend, ist ein gasisolierter elektrischer Leiter 3 an der Brücke 1 zu verlegen. Dazu sind an der Brücke 1 mehrere Rollenlageranordnungen 4a, b, c, d, e, f, g, h angeordnet. Aufgrund der Biegung des gasisolierten elektrischen Leiters 3 können mechanische Spannungen auftreten, die eine Drehbewegung um die Längsachse hervorrufen. Ein gasisolierter elektrischer Leiter 3 weist eine Konstruktion auf, die im Wesentlichen aus einem beispielsweise metallischen Außenrohr besteht, wobei in dessen Inneren der eigentliche Leiterzug angeordnet ist. Der Leiterzug ist mittels elektrisch isolierender Stützelemente an dem Rohrkörper abgestützt. Das Innere des gasisolierten elektrischen Leiters 3 wird unter Betriebsbedingungen mit einem Isoliergas befüllt. Der bis zu mehrere 100 oder 1.000 Meter Länge aufweisende gasisolierte elektrische Leiter 3 wird aus einige Meter Länge aufweisenden Abschnitten zusammengefügt. Die Zusammenfügung erfolgt dabei meist an einem festen Ort, wobei nach erfolgter Montage der gasisolierte elektrische Leiter 3 beispielsweise auf Rollenlageranordnungen in seine Endlage verbracht wird. Trotz seiner robusten Konstruktion sind jedoch während eines Verlegens auftretende Verwindungen zu vermeiden, um insbesondere die Fügestellen vor zusätzlichen mechanischen Belastungen zu bewahren. Aufbau und Wirkungsweise einer Rollenlageranordnung wird am Beispiel der in Figur 2 dargestellten Rollenlageranordnung 4h beschrieben.

Die Figur 2 zeigt den gasisolierten elektrischen Leiter 3, der über die Rollenlageranordnung 4h in Richtung des Pfeiles 5 bewegt wird. Der Zug des gasisolierten Leiters 3 kann beispielsweise mittels eines an seiner Spitze des befestigten Seiles erfolgen. Die Rollenlageranordnung 4h weist eine Tragkonstruktion 6 auf. Die Tragkonstruktion 6 ist an der Brücke 1 befestigt. An der Tragkonstruktion 6 ist eine drehbar gelagerte Rolle 7 angeordnet. Die drehbar gelagerte Rolle 7 ist bezüglich ihrer Drehachse im Wesentlichen quer zur Verschieberichtung des gasisolierten elektrischen Leiters 3 angeordnet. Für eine bessere Lagerung des gasisolierten elektrischen Leiters 3 ist die Rolle tailliert ausgestaltet (siehe Figur 3). Alternativ kann auch vorgesehen sein, mehrere Rollen an der Rollenlageranordnung vorzusehen, um eine genaue Führung des gasisolierten elektrischen Leiters 3 zu gewährleisten. So können beispielsweise seitliche Führungsrollen vorgesehen sein. Weiterhin ist an der Rollenlageranordnung 4a eine Bremseinrichtung 8 angeordnet. Die Bremseinrichtung 8 ist ebenfalls an der Tragkonstruktion 6 befestigt. Als bremsendes Element weist die Bremseinrichtung 8 eine Bremsrolle 9 auf. Die Bremsrolle 9 ist zumindest teilweise konisch ausgestaltet und bedarfsweise auf die Mantelfläche des gasisolierten elektrischen Leiters 3 aufpressbar. Im vorliegenden Ausführungsbeispiel der Rollenlageranordnung 4h ist die Drehachse der Bremsrolle 9 im Wesentlichen senkrecht angeordnet.

Die Wirkungsweise der Bremseinrichtung 8 ist der Figur 3 entnehmbar. Die Bremsrolle 9 ist bedarfsweise auf die Oberfläche des gasisolierten elektrischen Leiters 3 aufpressbar (siehe Doppelpfeil Figur 3). Im vorliegenden Falle wird die Bremseinrichtung 8 auf der Tragkonstruktion beispielsweise mittels eines Motorantriebes verschoben. Es kann jedoch auch vorgesehen sein, dass andere Mechaniken,'wie beispielsweise Schwenkmechaniken, zum Einsatz gelangen, um die Bremseinrichtung auf den gasisolierten elektrischen Leiter 3 aufzupressen. Die Bremseinrichtung 8 mit Bremsrolle 9 greift am Umfang des gasisolierten elektrischen Leiters 3 an und bremst Bewegungen in Umfangsrichtung.

Bei dem Vorsehen mehrerer Rollenlageranordnungen 4a, b, c, d, e, f, g und h, die jeweils eine Bremseinrichtung aufweisen, ist es vorteilhaft, wenn die Bremswirkung der einzelnen Rollenlageranordnungen untereinander koordiniert ausgelöst werden. So ist es beispielsweise möglich, bei einem Verwinden des gasisolierten Rohrleiters 3 in einem bestimmten Abschnitt ausschließlich die in diesem Abschnitt befindlichen Bremseinrichtungen zu steuern und eine gezielte Bremsung der Verwindungsbewegung hervorzurufen. Alternativ kann auch vorgesehen sein, bereits außerhalb dieser Verwindungszonen Bremsmomente zu erzeugen, um so eine Entspannung der Verwindung zu ermöglichen.

Ein geeignetes Verfahren zum Verlegen der gasisolierten elektrischen Leitung 3 ist es dabei, die Lage des gasisolierten elektrischen Leiters 3 in einer Nullposition mittels einer Messeinrichtung 10 zu überwachen. Diese Lage ist vorteilhaft an mehreren Abschnitten des gasisolierten elektrischen Leiters 3 zu ermitteln. Bei einem Auslenken aus einer Nulllage wird dies an eine Steuereinrichtung weitergegeben. In Abhängigkeit der voranschreitenden verlegung des gasisolierten elektrischen Leiters 3, kann nun gezielt die Ansteuerung einzelner Bremseinrichtungen an den Rollenlageranordnungen 4a, b, c, d, e, f, g und h ausgelöst werden. Durch eine derartige kontinuierliche Überwachung der Lage des gasisolierten Leiters während des Verlegens werden bereits kleine Verdrehungen des Leiters aus der Idealposition registriert und es kann entsprechend durch den Einsatz verschiedener Bremseinrichtungen gegengewirkt werden.

## Patentansprüche

1. Rollenlageranordnung mit zumindest einer drehbar gelagerten Rolle (7), auf welche ein sich entlang einer Längsachse erstreckendes und verschiebbares Element auflegbar ist, wobei eine Drehachse der Rolle (7) im Wesentlichen quer zur Längsachse des verschiebbaren Elements ausgerichtet ist und der Rollenlageranordnung eine Bremseinrichtung (8) zugeordnet ist, die zu einem Angreifen an dem lang gestreckten Element eingerichtet ist, wobei die Bremseinrichtung (8) quer zur Längsachse des verschiebbaren Elementes parallel zu der Drehachse der Rolle (7) auf eine Oberfläche des verschiebbaren Elementes aufpressbar ist,
**dadurch gekennzeichnet, dass** die Bremskraft der Bremseinrichtung (8) regelbar ist.

2. Rollenlageranordnung nach Anspruch 1,
**dadurch gekennzeichnet, dass** die Bremseinrichtung (8) ein seitliches Ausbrechen des lang gestreckten Elementes begrenzt.

3. Rollenlageranordnung nach einem der Ansprüche 1 oder 2,
**dadurch gekennzeichnet, dass** die Bremseinrichtung (8) eine Bremsrolle (9) aufweist.

4. Rollenlageranordnung nach Anspruch 3,
**dadurch gekennzeichnet, dass** die Bremsrolle (9) eine im Wesentlichen in einer Vertikalen liegende Drehachse aufweist.

5. Rollenlageranordnung nach einem der Ansprüche 1 bis 4,
**dadurch gekennzeichnet, dass** die Bremseinrichtung (8) auf das lang gestreckte Element aufsetz- und abhebbar ist.

## Claims

1. Roller bearing arrangement with at least one rotationally mounted roller (7), onto which an element can be placed which extends along a longitudinal axis and is displaceable, an axis of rotation of the roller (7) being aligned substantially transversely with respect to the longitudinal axis of the displaceable element, and a braking device (8), which is designed to act on the elongate element, being associated with the roller bearing arrangement, the braking device (8) being capable of being pressed onto a surface of the displaceable element transversely with respect to the longitudinal axis of the displaceable element and parallel to the axis of rotation of the roller (7), **characterized in that** the braking force of the braking device (8) can be regulated.

2. Roller bearing arrangement according to Claim 1, **characterized in that** the braking device (8) limits a lateral swerving of the elongate element.

3. Roller bearing arrangement according to either of Claims 1 and 2, **characterized in that** the braking device (8) has a braking roller (9).

4. Roller bearing arrangement according to Claim 3, **characterized in that** the braking roller (9) has an axis of rotation which lies substantially on a vertical.

5. Roller bearing arrangement according to one of Claims 1 to 4, **characterized in that** the braking device (8) can be placed onto and lifted off from the elongate element.

## Revendications

1. Dispositif de roulement à rouleaux, comprenant au moins un rouleau ( 7 ) monté tournant, sur lequel peut être appliqué un élément s'étendant le long d'un axe longitudinal et coulissant, un axe de rotation du rouleau ( 7 ) étant dirigé sensiblement transversalement à l'axe longitudinal de l'élément coulissant et un dispositif ( 8 ) de frein étant associé au dispositif de roulement à rouleaux, dispositif de frein qui est conçu pour attaquer l'élément s'étendant en longueur, le dispositif ( 8 ) de frein pouvant être appliqué, transversalement à l'axe longitudinal de l'élément coulissant et parallèlement à l'axe de rotation du rouleau ( 7 ), à une surface de l'élément coulissant,
la force de freinage du dispositif ( 8 ) de frein est réglable.

2. Dispositif de roulement à rouleaux suivant le revendication 1,
**caractérisé en ce que**
le dispositif ( 8 ) de frein limite un dérapage latéral de l'élément s'étendant en longueur.

3. Dispositif de roulement à rouleaux suivant l'une des revendications 1 ou 2,
**caractérisé en ce que**
le dispositif ( 8 ) de frein comporte un galet ( 9 ) de frein.

4. Dispositif de roulement à rouleaux suivant la revendication 3,
**caractérisé en ce que**
le galet ( 9 ) de frein a un axe de rotation à peu près vertical.

5. Dispositif de roulement à rouleaux suivant l'une des revendications 1 à 4,
**caractérisé en ce que**
le dispositif ( 8 ) de frein peut être mis sur l'élément s'étendant en longueur et en être retiré.
